Europäisches Patentamt

European Patent Office

Office européen des brevets

(11) Veröffentlichungsnummer: **0 428 154 A1**

## EUROPÄISCHE PATENTANMELDUNG

(21) Anmeldenummer: 90121789.3

(22) Anmeldetag: 14.11.90

(51) Int. Cl.5: **G01L 5/24**, F16B 31/02, G01D 21/00, G01D 5/12

(30) Priorität: 14.11.89 DE 3937881

(43) Veröffentlichungstag der Anmeldung:
22.05.91 Patentblatt 91/21

(84) Benannte Vertragsstaaten:
FR GB IT

(71) Anmelder: Niedermaier, Benno
Ludwig-Thoma Strasse 14
W-8021 Strasslach(DE)

(72) Erfinder: Niedermaier, Benno
Ludwig-Thoma Strasse 14
W-8021 Strasslach(DE)

(54) Verfahren und Vorrichtung zur Überprüfung des Festsitzes von Schrauben.

(57) Es werden eine Vorrichtung und ein Verfahren zur Überprüfung des Festsitzes von Schrauben beschrieben, wobei bei geringster Lockerung einer Schraube der elektrische Kontakt zwischen einer Kurzschlußspule und einer Kurzschlußplatte unterbrochen wird. Der jeweilige Zustand der Schraubenbefestigung wird mit Hilfe einer Meßspule überprüft und das Meßergebnis einem Anzeigegerät für kleine Induktionsänderungen zugeführt.

Fig. 1

EP 0 428 154 A1

Die Erfindung betrifft eine Vorrichtung und ein Verfahren zur Überprüfung des Festsitzes von Schrauben gemäß den Merkmalen der Ansprüche 1 bzw. 8.

Bei Vorrichtungen, die eine Vielzahl von Schraubenverbindungen aufweisen, wobei es auf den Festsitz jeder einzelnen Schaubenverbindung ankommt, wie es etwa bei Schienenfahrzeugen oder Magnetschwebebahnen der Fall ist, stellt die Überprüfung der Schraubenverbindungen ein Problem dar, das derzeit nur unter großem Zeit- und Arbeitsaufwand zu lösen ist. Bisher wurden die Schrauben von Hand mit Hilfe von Drehmomentschlüsseln kontrolliert. Bei einer Magnetschwebebahn wäre diese Aufgabe auf konventionelle Weise, z. B. mit Hilfe von Streckengehern nicht zu lösen, da die Schraubenbefestigungen an unzugänglichen Stellen liegen. Dies hätte unweigerlich einen Betriebstillstand zur Folge.

Aus der US-PS-3736394 ist eine Vorrichtung bekannt, welche die Merkmale des Oberbegriffs des Anspruchs 1 aufweist und mit welcher eine Lösung des vorgenannten Problems im Prinzip möglich ist. In der Praxis jedoch ist die dort beschriebene Lösung zu aufwendig, um wirtschaftlich einsetzbar zu sein, da fest verdrahtete Zuleitungen zu jeder einzelnen Schraube erforderlich sind. Eine rasche, berührungsfreie Messung ist mit dieser Vorrichtung nicht möglich. Außerdem sind für jede Schraube vier weitere Lötverbindungen erforderlich, was für die Sicherheit der Anzeige zusätzliche Fehlerquellen birgt.

Die US-PS-1559631 beschreibt eine Vorrichtung zur Überprüfung des Spannungszustands von Schrauben mit Hilfe der Messung der Verschiebung der Resonanzfrequenz eines Schwingkreises. Das Meßprinzip ist somit ein völlig anderes und auch der Aufbau der Vorrichtung, die ohne eine Vorspannfeder arbeitet und somit nicht in der Lage ist, auf einfache Weise eine Ja-Nein-Antwort zu geben, ist nicht geeignet, die erfindungsgemäße Vorrichtung nahezulegen.

Es lag daher nahe, nach einer Lösung zu suchen, die eine rasche und einfache Kontrolle gestattet und die deshalb auch wirtschaftlich ist. Eine Lösung ist mit einer speziellen Vorrichtung möglich, die die Merkmale des Kennzeichens des Anspruchs 1 aufweist. Vorteilhafte Ausbildungsformen dieser Vorrichtung sind in den Unteransprüchen 2 bis 7 niedergelegt. Das Verfahren unter Verwendung dieser Vorrichtung wird in Anspruch 8 beschrieben, wobei die Ansprüche 9 und 10 vorteilhafte Einsatzgebiete des Verfahrens aufzeigen.

Die beanspruchte Vorrichtung wird im folgenden anhand der Figuren 1 - 3 erläutert:

Es zeigen

Fig. 1 : eine Seitenansicht der gesamten Vorrichtung

Fig. 2 : eine Frontansicht der Kontaktplatte

Fig. 3 : eine Frontansicht der Kurzschlußplatte.

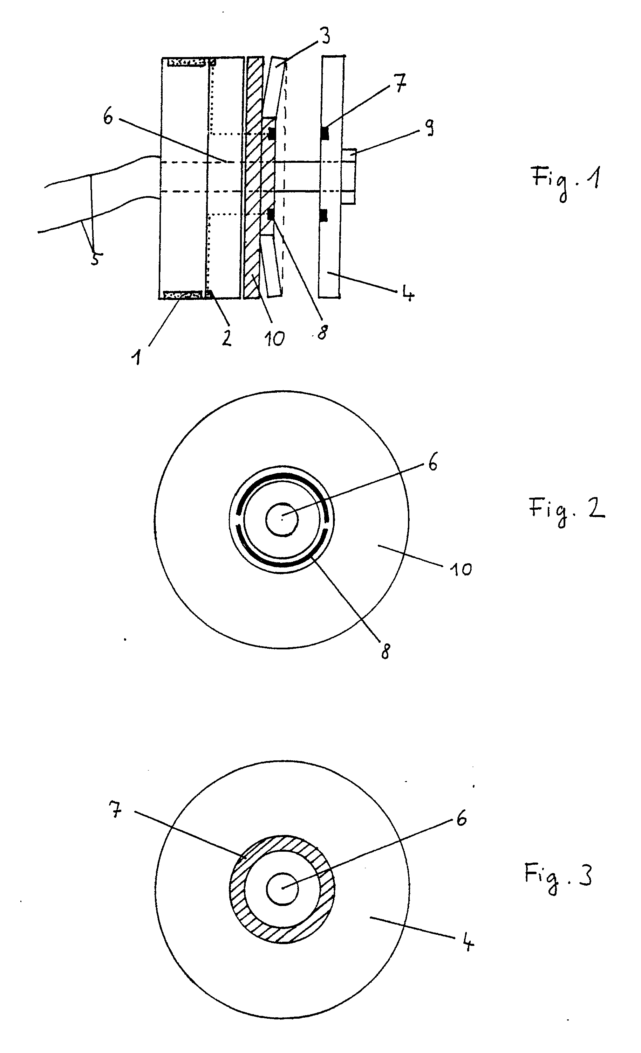

Die Funktionsweise wird am einfachsten mit Hilfe der Fig. 1 klar. Die zu untersuchende Schraube 9 drückt im befestigten Zustand die Kontaktplatte 10, mit der die Kurzschlußspule 2 verbunden ist, über eine Vorspannvorrichtung für die hier eine Tellerfeder 3 verwendet wird, gegen eine Kurzschlußplatte 4. Dabei werden die Kontakte 8 der Kurzschlußspule 2 über den Kurzschlußring 7 der Kurzschlußplatte 4 geschlossen. Falls eine Schraube etwas gelockert sein sollte, drückt die Tellerfeder 3 die Kontakte 8 von der Kurzschlußplatte 4 und öffnet die Spule 2. Fährt man mit der Meßspule über die Kurzschlußspule 2, solange die Kontakte geschlossen sind, so wird ein Spannungssignal über das Meßkabel 5 zum Meßgerät geleitet und dort aufgezeichnet. Im gelockerten Zustand wird kein Spannungssignal abgegeben.

Am Meßgerät ist dann leicht festzustellen, welche Schraubenverbindung fehlerhaft ist.

In Fig. 2 ist eine Frontansicht der Kontaktplatte 10 wiedergegeben, wobei die Anordnung der Spulenkontakte 8 um die Öffnung 6 zur Aufnahme der Schraube zu erkennen ist.

Aus Fig. 3 läßt sich entnehmen, wie der Kurzschlußring 7 auf der Kurzschlußplatte 4 angeordnet ist.

Die Kurzschlußspule besteht aus einer oder mehreren Windungen, die in einen Kunststoffbehälter eingebettet sind. Die Enden der Kurzschlußspule werden mit den Kontakten 8 er Kurzschlußplatte 4 elektrisch leitend verbunden. Zur Vermeidung von Ausfällen durch Korrosion, die die Betriebssicherheit erheblich gefährden würden, werden die Kontakte 8 vorzugsweise mit einem elektrisch gut leitfähigen sowie korrosionsbeständigen Material überzogen. Je nach Einsatzgebiet eignet sich hierfür z. B. Vergolden oder Verzinnen.

Als Vorspannvorrichtung wird vorzugsweise eine Tellerfeder 3 verwendet. Es eignen sich jedoch auch andere Möglichkeiten, wie z. B. Druckfedern, die auch in Bohrungen eingelassen sein können. Es können auch mehrere Teller- und/oder Druckfedern verwendet werden, die übereinander angeordnet sind.

Die Kurzschlußplatte 4 ist vorzugsweise aus Stahl ausgeführt. Es hat sich bewährt, diese mit einem Ring aus gut leitfähigem, korrosionsbeständigem Material zu versehen, über das der eigentliche Kurzschluß vollzogen wird.

Um die Meßgeschwindigkeit zu erhöhen, wird die Meßspule vorzugsweise auf einen Meßwagen montiert, der mit einer Geschwindigkeit von bis zu 30 km/h über die Strecke mit den zu untersuchenden Schrauben fahren kann. Dies gestattet es, bei einer Strecke wie etwa der Versuchsstrecke der Magnetschwebebahn im Emsland, bei der zum Abstand von jeweils 1 m Schrauben angebracht sind, 30 000 Schrauben pro Stunde zu vermessen. Falls mehrere Meßspulen parallel angeordnet sind, erhöht sich diese Zahl um den jeweiligen Faktor.

Natürlich kann im Prinzip die Messung auch statisch über fest verdrahtete Zuleitungen erfolgen.

## Ansprüche

1. Vorrichtung zur Überprüfung des Festsitzes von Schrauben, bestehend aus einer Kurzschlußspule, die mit einer Kontaktplatte verbunden ist und gegen die Kraft einer Vorspannvorrichtung gegen eine Kurzschlußplatte in solcher Weise gepreßt ist, daß bei geringster Lockerung der Schraube der elektrische Kontakt zwischen Kurzschlußspule und Kurzschlußplatte unterbrochen wird sowie einer Meßspule mit einem Anzeigegerät für kleine Induktionsänderungen, welches den Zustand der Schraubenbefestigung anzeigt.

2. Vorrichtung nach Anspruch 1, dadurch gekennzeichnet, daß die Kontakte der Kurzschlußspule mit einem Überzug aus elektrisch leitfähigem, korrosionsbeständigem Material versehen sind.

3. Vorrichtung nach Anspruch 1, dadurch gekennzeichnet, daß als Vorspannvorrichtung eine Tellerfeder verwendet wird.

4. Vorrichtung nach einem oder mehreren der vorstehenden Ansprüche, dadurch gekennzeichnet, daß die Kurzschlußplatte mit einem Ring aus elektrisch gut leitfähigem sowie korrosionsbeständigem Material überzogen ist.

5. Vorrichtung nach einem oder mehreren der vorstehenden Ansprüche, dadurch gekennzeichnet, daß die Kurzschlußspule in einen Kunststoffkörper eingebettet ist.

6. Vorrichtung nach einem oder mehreren der vorstehenden Ansprüche, dadurch gekennzeichnet, daß zur automatischen Messung ein Meßwagen vorgesehen ist.

7. Vorrichtung nach einem oder mehreren der vorstehenden Ansprüche, dadurch gekennzeichnet, daß zur Messung von mehreren Schrauben zugleich Zuleitungen für einen Fernabruf vorgesehen sind.

8. Verfahren zum Überprüfen des Festsitzes von Schrauben, dadurch gekennzeichnet, daß eine Vorrichtung nach einem der vorstehenden Ansprüche verwendet wird.

9. Verfahren nach Anspruch 8, dadurch gekennzeichnet, daß der Festsitz von Schrauben an Schienen überprüft wird.

10. Verfahren nach Anspruch 8 oder 9, dadurch gekennzeichnet, daß die Befestigungsschrauben der Statoren von Magnetschwebebahnen überprüft werden.

Fig. 1

Fig. 2

Fig. 3

4

## Europäisches Patentamt

# EUROPÄISCHER RECHERCHENBERICHT

Nummer der Anmeldung

**EP 90 12 1789**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 648 833 (WILSON ET AL.)<br>* Spalte 2, Zeile 53 - Spalte 3, Zeile 46; Figur 4 *<br>– – – | 1 | G 01 L 5/24<br>F 16 B 31/02<br>G 01 D 21/00<br>G 01 D 5/12 |
| A | PATENT ABSTRACTS OF JAPAN vol. 7, no. 121 (P-199)(1266) 25 Mai 1983,<br>& JP-A-58 39920 (HITACHI KENKI K.K.) 08 März 1983,<br>* das ganze Dokument *<br>– – – | 1 | |
| A | US-E-3 018 3 (CHARLES H. POPENOE)<br>* Zusammenfassung *<br>– – – – – | 1 | |

| RECHERCHIERTE SACHGEBIETE (Int. Cl.5) |
|---|
| G 01 D<br>G 01 L<br>F 16 B |

Der vorliegende Recherchenbericht wurde für alle Patentansprüche erstellt

| Recherchenort | Abschlußdatum der Recherche | Prüfer |
|---|---|---|
| Den Haag | 12 Februar 91 | LUT K. |